# EUROPÄISCHE PATENTANMELDUNG

(11) **EP 4 653 377 A1**
(43) Veröffentlichungstag der Anmeldung: **26.11.2025**
(21) Anmeldenummer: 25176876.8
(22) Anmeldetag: 16.05.2025
(51) Int. Cl.: B66F 9/07, B66F 9/24, B66F 17/00

(54) **VERFAHREN UND KOLLISIONSKLASSIFIKATIONSSYSTEM ZUM KLASSIFIZIEREN EINES KOLLISIONSEREIGNISSES AN EINEM REGALSYSTEM**

(30) Priorität: 23.05.2024 DE 102024114515
(71) Anmelder: Jungheinrich AG, 22047 Hamburg (DE)
(72) Erfinder: WETEGROVE, Ralf, 22850 Norderstedt (DE); BRUSS, Benjamin, 22397 Hamburg (DE)
(74) Vertreter: Seemann & Partner Patentanwälte mbB

(57) **Zusammenfassung**

Die Erfindung betrifft u.a. ein Verfahren zum Klassifizieren eines Kollisionsereignisses (40) an einem Regalsystem (20), umfassend die folgenden Schritte:
- eine an einem Regalsystem (20) angeordnete Sensoreinheit (22) erkennt ein Kollisionsereignis (40) zwischen einem Flurförderzeug (30) und dem Regalsystem (20) und ermittelt eine Stärke des Kollisionsereignisses (S110), vergleicht die ermittelte Stärke mit einer Referenzstärke (S120) und sendet ein dem Kollisionsereignis (40) zugeordnetes Kollisionssignal (42) aus, falls die ermittelte Stärke die Referenzstärke überschreitet (S130);
- eine Empfangseinheit (34) eines Flurförderzeugs (30) empfängt das Kollisionssignal (42) und leitet es an eine Steuereinheit (36) des Flurförderzeugs (30) weiter (S210), welche eine Klassifikation des Kollisionsereignisses (40) in Abhängigkeit von Zustandsdaten des Flurförderzeugs (30) und vom Kollisionssignal (42) durchführt (S220), wobei die Klassifikation des Kollisionsereignisses (40) ein Zuordnen eines Kollisionstyps aus einer Kollisionstypliste umfasst, wobei die Kollisionstypliste mindestens einen Kollisionstyp, für den das Kollisionsereignis (40) nicht dem Flurförderzeug (30) zugeordnet wird, und mindestens einen Kollisionstyp, insbesondere mindestens zwei verschiedene Kollisionstypen, für den bzw. die das Kollisionsereignis (40) dem Flurförderzeug (30) zugeordnet wird, umfasst.

## Beschreibung

Die Erfindung betrifft ein Verfahren zum Klassifizieren eines Kollisionsereignisses an einem Regalsystem sowie ein Kollisionsklassifikationssystem zum Klassifizieren eines Kollisionsereignisses an einem Regalsystem.

Regalsysteme werden üblicherweise in Lager- und Logistikeinrichtungen verwendet, wo zum Be- und Entladen der Regalsysteme beispielsweise Flurförderzeuge eingesetzt werden. Hierbei besteht, beispielsweise durch Fehlbedienung, ein Risiko, dass ein Flurförderzeug mit einem Regal kollidiert und ein Kollisionsereignis erzeugt.

Im Einsatzgebiet von Flurförderzeugen bilden Regalständer einen besonders sensiblen Teil eines stehenden Regals, da sie bauartbedingt die komplette Last des Regals tragen. Schäden an Regalständern, beispielsweise durch das Anfahren dieser mit einem Flurförderzeug können zum Umkippen oder Kollabieren des Regals führen und damit Menschen und Waren gefährden.

Aus DE 10 2020 127 745 A1 ist ein Kollisionswarnsystem bekannt, wobei das System aus mindestens einem Flurförderzeug und mindestens einer Kollisionsmeldeeinrichtung besteht. Die Kollisionsmeldeeinrichtung weist eine Montageeinheit, eine stoßempfindliche Sensoreinheit, eine Datenverarbeitungseinheit und eine Sendeeinheit auf, wobei die Sensoreinheit mittels der Montageeinheit an einem auf Kollisionen zu überwachenden Regalsystem befestigbar ist. Die Sensoreinheit ist dazu ausgebildet, einen Impulsübertrag von dem Flurförderzeug an das Regalsystem zu messen und die Datenverarbeitungseinrichtung vergleicht den gemessenen Impuls mit einem Referenzimpuls und steuert bei Überschreiten des Referenzimpulses die Sendeeinheit an, um ein Kollisionssignal auszusenden. Im Fall einer Kollision wird beispielsweise direkt ein Warnhinweis auf dem Flurförderzeug ausgelöst, so dass die entsprechende Bedienperson darauf reagieren kann.

Insbesondere ist ein Betrieb eines Kollisionswarnsystems mit einer Batterie vorgesehen, wobei beispielsweise die Batterie bei Bedarf die Datenverarbeitungs- und Sendeeinheit am Regalsystem speist. Bei einem Batteriebetrieb sind als Teil einer Wartung regelmäßig die Batterien in Abhängigkeit einer Betriebsdauer auszutauschen.

EP 2 483 120 B1 offenbart ein Verfahren zur Überwachung des Betriebs eines Fahrzeugs, das die folgenden Schritte umfasst: Erfassen, dass eine Krafteinwirkung auf das Fahrzeug stattgefunden hat; Berechnen einer Impulsänderung des Fahrzeugs; Bestimmen, ob die Impulsänderung und die Krafteinwirkung innerhalb eines vorgegebenen Zeitraums auftreten; und Erzeugen eines Aufprallsignals, das anzeigt, dass die Impulsänderung und die Krafteinwirkung innerhalb des vorgegebenen Zeitraums stattgefunden haben. Beispielsweise ist für das Erfassen einer Krafteinwirkung vorgesehen, dass ein g-Kraft-Signal von einem an einem Materialhandhabungsfahrzeug angebrachten Beschleunigungsmesser erzeugt wird und mit einem wählbaren g-Kraft-Grenzschwellenwert verglichen wird. Ein Aufprallsignal wird unter anderem nur erzeugt, wenn das g-Kraft-Signal größer ist als der wählbare g-Kraft-Grenzschwellenwert.

Bei einer Kollisionsüberwachung, bei den das Überschreiten von Grenzwerten wie einer g-Kraft und/oder eines Impulses, überprüft wird, lösen teilweise übliche Einlagerungsvorgänge ungewollt einen Kollisionsalarm aus. Für eine Festlegung von Grenzwerten besteht die Schwierigkeit, dass ein einziger Grenzwert für alle möglichen Kollisionstypen vorbestimmt ist, obwohl möglicherweise bei einem Einlagerungsvorgang höhere, aber ungefährliche, Kräfte auftreten als bei einer gefährlichen Kollision eines Fahrzeugs mit einem Regalständer. Fehlalarme und ihre Überprüfung stellen eine Beeinträchtigung des Betriebs einer Lagereinrichtung dar.

Daraus ergibt sich die Aufgabe, bei geringem Wartungs- und Ressourcenaufwand zuverlässig und präzise vor Kollisionsereignissen an einem Regalsystem zu warnen.

Gelöst wird die Aufgabe durch ein Verfahren zum Klassifizieren eines Kollisionsereignisses an einem Regalsystem, umfassend die folgenden Schritte:
- eine an einem Regalsystem angeordnete Sensoreinheit erkennt ein Kollisionsereignis zwischen einem Flurförderzeug und dem Regalsystem und ermittelt eine Stärke des Kollisionsereignisses, vergleicht die ermittelte Stärke mit einer Referenzstärke und sendet ein dem Kollisionsereignis zugeordnetes Kollisionssignals aus, falls die ermittelte Stärke die Referenzstärke überschreitet;
- eine Empfangseinheit eines Flurförderzeugs empfängt das Kollisionssignal und leitet es an eine Steuereinheit des Flurförderzeugs weiter, welche eine Klassifikation des Kollisionsereignisses in Abhängigkeit von Zustandsdaten des Flurförderzeugs und vom Kollisionssignal durchführt, wobei die Klassifikation des Kollisionsereignisses ein Zuordnen eines Kollisionstyps aus einer Kollisionstypliste umfasst, wobei die Kollisionstypliste mindestens einen Kollisionstyp, für den das Kollisionsereignis nicht dem Flurförderzeug zugeordnet wird, und mindestens einen Kollisionstyp, insbesondere mindestens zwei verschiedene Kollisionstypen, für den bzw. die das Kollisionsereignis dem Flurförderzeug zugeordnet wird, umfasst.

Ein Grundgedanke der Erfindung besteht darin, ein Kollisionsereignis mittels einer Kombination von einer am Regalsystem ermittelten Stärke des Kollisionsereignisses und von Zustandsdaten, beispielsweise Bewegungsdaten, eines Flurförderzeugs zu charakterisieren und zu klassifizieren, wobei die Charakterisierung und Klassifizierung des Kollisionsereignisses im Flurförderzeug erfolgt. Die Analyse des Kollisionsereignisses sowie die Klassifikation im Flurförderzeug gestattet mehrere technische Vorteile.

Einerseits ist der Energieverbrauch der Sensoreinheit am Regalsystem sehr gering, da nur ein einfacher Vergleich mit einer vorbestimmten Referenzstärke vorgesehen ist. Eine komplexere Analyse findet im Flurförderzeug statt, dessen Batterielaufzeit durch die Analyse nicht beeinträchtigt ist.

Andererseits würde eine simple Analyse der Stärke des Kollisionsereignisses in der Sensoreinheit allein keine Klassifikation des Kollisionsereignisses und eine Zuordnung eines Kollisionstyps erlauben.

Beispielsweise können ein Anfahren eines Regals durch ein Flurförderzeug oder ein Einlagern einer Palette in ein Regal verschiedene Kollisionstypen darstellen. Beide Ereignisse bewirken Vibrationen in einem Regalsystem, welche als Kollisionsereignis von einer Sensoreinheit erkannt werden können. Hier bietet die Klassifikation von Kollisionsereignissen ein vielfältig anpassbares Instrument, um nachfolgende Entscheidungen treffen zu können, wie beispielsweise geeignete Maßnahmen im Nachgang zu einer Kollision.

Dadurch, dass Kollisionsereignisse in Abhängigkeit von sowohl dem Kollisionssignal als auch von Zustandsdaten des Flurförderzeugs klassifiziert werden, können die Kollisionsereignisse spezifisch charakterisiert werden. Dies ermöglicht eine zuverlässige und präzise Warnung vor Kollisionsereignissen, zum Beispiel als eine Warnung für einen Nutzer eines Flurförderzeugs.

Mindestens ein Kollisionstyp aus der Kollisionstypliste ist ein Kollisionstyp, für den das Kollisionsereignis nicht dem Flurförderzeug zugeordnet wird. Dieser Typ wird dem Kollisionsereignis insbesondere zugeordnet, wenn die Analyse des Flurförderzeugs ergibt, dass das Flurförderzeug nicht für das Kollisionsereignis verantwortlich ist. Beispielsweise ist ein Flurförderzeug, welches sich in einem Zeitfenster, in welchem der Zeitpunkt des Kollisionsereignisses liegt, vor und nach dem Kollisionsereignis kontinuierlich mit einer Geschwindigkeit größer als einer vorbestimmten Rangiergeschwindigkeit bewegt, sehr wahrscheinlich nicht für ein Kollisionsereignis verantwortlich.

Mindestens ein Kollisionstyp repräsentiert eine Kollision, bei dem das analysierende Flurförderzeug beteiligt war, so dass das Flurförderzeug selbst in der einfachsten Form beispielsweise inspiziert werden kann. Vorzugsweise sind mindestens zwei Kollisionstypen aus der Kollisionsliste verschiedene Kollisionstypen, für die das Kollisionsereignis dem Flurförderzeug zugeordnet wird. Dies ermöglicht eine weitergehende Verfeinerung der Erfassung verschiedener Typen von Kollisionsereignissen. Beispielsweise können Fahrtkollisionen, d.h. Kollisionen, die dadurch erfolgen, dass ein Regal angefahren, also bei der Fahrt angestoßen wird, und Lagerkollisionen, die beim Ein- oder Auslagern einer Last in ein Regal erfolgen, in zwei verschiedenen Kollisionstypen gefasst werden.

Insbesondere liegt eine Lagerkollision vor, wenn bei einer Einlagerung einer Last in ein Regal Gabelzinken eines Flurförderzeugs auf einem Regalboden aufsetzen oder eine auf den Gabelzinken getragene Last auf dem Regalboden des Regalsystems abgesetzt wird. Weitere Kollisionstypen sind beispielsweise eine Fahrtkollision mit Gabelzinken des Flurförderzeugs und/oder eine Fahrtkollision mit Lastradarmen des Flurförderzeugs und/oder eine Fahrtkollision mit dem Heck eines Flurförderzeugs. Zudem sind für eine Lagerkollision beispielhafte Kollisionstypen eine Einlagerung einer Last in einer vorbestimmten Höhe und/oder eine Kollision mit einem Querträger des Regalsystems aufgrund nicht ausreichend angehobener Last. Ferner sind in Ausführungsformen verschiedene Kollisionstypen für verschiedene Intensitäten von Kollisionsereignissen vorgesehen, z.B. eine Fahrtkollision mit einem Regal mit schwacher, mit mittlerer und/oder mit hoher Intensität.

Bevorzugterweise ist das Verfahren zum Klassifizieren eines Kollisionsereignisses an einem Regalsystem derart weitergebildet, dass das Zuordnen eines Kollisionstyps umfasst, dass mindestens eine Kollisionstypwahrscheinlichkeit ermittelt wird, welche eine Wahrscheinlichkeit angibt, dass das Kollisionsereignis eindeutig einem bestimmten Kollisionstyp zuordenbar ist, wobei insbesondere für jeden Kollisionstyp jeweils eine eigene Kollisionstypwahrscheinlichkeit ermittelt wird. Hierdurch wird eine zuverlässige Klassifizierung des Kollisionsereignisses gewährleistet.

Nicht in jedem Kollisionsfall ist die Frage, welcher Kollisionstyp vorliegt, zweifelsfrei zu beantworten. Beispielsweise kann ein an einer Kollision nicht beteiligtes Fahrzeug zum Zeitpunkt der Kollision selbst Fahr- oder Lademanöver ausüben und gegebenenfalls Erschütterungssignale erhalten, die, durch Koinzidenz, eine Kollisionswahrscheinlichkeit von größer als Null entstehen lassen. Andererseits kann ein Flurförderzeug beispielsweise beim Fahren von einem Einsatzort zu einem anderen Einsatzort ein aus einem Lagerregal irregulär herausragendes Objekt touchieren. Ein solches Touchieren würde beim Flurförderzeug kaum ein Signal hinterlassen. Wenn das Objekt in der Folge umfällt, kann dies zur Aussendung eines Kollisionssignals führen. In einem solchen Fall wird das Flurförderzeug gegebenenfalls als stärkstes Signal seine Nähe zu dem betroffenen Lagerregal haben, und keine sehr hohen Wahrscheinlichkeiten für verschiedene konkrete Kollisionstypen. Für solche schwer auszuwertenden Fälle kann gegebenenfalls eine weitere Kategorie der Kollisionstypen angelegt sein oder werden.

In Ausführungsformen ist vorgesehen, dass die Klassifikation ein Vergleichen mehrerer Kollisionstypwahrscheinlichkeiten umfasst, wobei der Kollisionstyp mit der größten Kollisionstypwahrscheinlichkeit als Ergebnis der Klassifikation angegeben wird. Alternativ oder zusätzlich kann bei der Auswahl des auszugebenden Kollisionstyps eine vorbestimmte Untergrenze für die Kollisionstypwahrscheinlichkeit verwendet werden, beispielsweise 60 % oder mehr, 75 % oder mehr oder 90 % oder mehr.

Für einen Vergleich von Kollisionstypwahrscheinlichkeiten ist vorteilhafterweise vorgesehen, dass eine Summe mehrerer Kollisionstypwahrscheinlichkeiten mit mindestens einer anderen Kollisionstypwahrscheinlichkeit verglichen wird. Beispielsweise kann die Summe von den Kollisionstypwahrscheinlichkeiten von Kollisionstypen, für die die Kollision dem Flurförderzeug zugeordnet werden, mit der Summe von den Kollisionstypen, für die die Kollision dem Flurförderzeug nicht zugeordnet werden, zur Klassifikation des Kollisionsereignisses verglichen werden.

Eine hohe Qualität der Klassifikation des Kollisionsereignisses wird dadurch ermöglicht, dass die Zustandsdaten des Flurförderzeugs eine Fahrgeschwindigkeit des Flurförderzeugs und/oder eine Hubgeschwindigkeit des Flurförderzeugs und/oder eine mittels eines am Flurförderzeug angebrachten Beschleunigungssensors gemessene Beschleunigung umfassen. Weiterhin ist in Ausführungsformen vorgesehen, dass die Zustandsdaten eine Drehwinkelgeschwindigkeit des Flurförderzeugs umfassen. Beispielsweise wird eine Fahrgeschwindigkeit des Flurförderzeugs mittels Odometrie gemessen.

Eine präzise Klassifikation des Kollisionsereignisses wird weiterhin verbessert, wenn die Zustandsdaten in einem Zeitfenster aufgenommen werden oder sind und das Zeitfenster den Zeitpunkt des Kollisionsereignisses sowie einen Zeitraum vor und/oder nach dem Zeitpunkt des Kollisionsereignis umfasst. Die Zustandsdaten des Flurförderzeugs sind in Ausführungsformen momentane Zustandsdaten zum Zeitpunkt des Kollisionsereignisses. In anderen Ausführungsformen umfassen diese Zustandsdaten auch Zustandsdaten aus einem Zeitfenster, welches den Zeitpunkt des Kollisionsereignisses enthält. Unter Nutzung dieser zusätzlichen Informationen sind zusätzliche Bedingungen und/oder Analysen für die Klassifikation möglich. Beispielsweise ist für die Klassifikation prüfbar, ob sich eine Fahrtrichtung, d.h. die Richtung einer Fahrtgeschwindigkeit, des Flurförderzeugs zwischen einem Zeitraum vor und einem Zeitraum nach dem Kollisionsereignis geändert, insbesondere invertiert, hat.

Insbesondere ist vorgesehen, dass für die Klassifikation des Kollisionsereignisses ein Flurförderzeugzustand zum Zeitpunkt des Kollisionsereignisses in Abhängigkeit der Zustandsdaten ermittelt wird, wobei insbesondere die mindestens eine Kollisionstypwahrscheinlichkeit und/oder der zugeordnete Kollisionstyp in Abhängigkeit des ermittelten Flurförderzeugzustands ermittelt wird. Die zusätzliche Bestimmung eines Flurförderzeugzustands ermöglicht eine Einordnung der Bewegung und/oder Position des Flurförderzeugs, was beispielsweise Grundlage für eine weitere Klassifikation des Kollisionsereignisses in einen Kollisionstyp ist. Mögliche Flurförderzeugzustände sind beispielsweise, und nicht abschließend, Leerfahrt, Lastfahrt, Rangierfahrt, Hubbewegung, Stillstand oder Ruhezustand. In Ausführungsformen ist zu einem Zeitpunkt jeweils genau ein Flurförderzeugzustand einem Flurförderzeug zugeordnet. In anderen Ausführungsformen ist einem Flurförderzeug zu einem Zeitpunkt mindestens ein Flurförderzeugzustand zugeordnet.

Weitere Informationen können der Klassifikation des Kollisionsereignisses entnommen werden, wenn das Zuordnen eines Kollisionstyps mindestens zwei aufeinanderfolgende Schritte aufweist, wobei in einem ersten Schritt, insbesondere mittels mindestens einer ersten Kollisionstypwahrscheinlichkeit, ermittelt wird, ob das Kollisionsereignis dem Flurförderzeug zugeordnet wird, und in einem zweiten Schritt, insbesondere mittels mindestens einer zweiten Kollisionstypwahrscheinlichkeit, dem Kollisionsereignis ein Kollisionstyp zugeordnet wird. Zudem erhöht eine Zweischrittigkeit die Effizienz des Verfahrens, weil eine Klassifikation zwischen verschiedenen Kollisionstypen, bei denen jeweils das Flurförderzeug als Verursacher zugeordnet ist, nicht durchgeführt werden muss, weil bereits in einem ersten Schritt das Flurförderzeug als Verursacher ausgeschlossen wurde.

Ein zuverlässiges Verfahren, die Stärke des Kollisionsereignisses zu ermitteln, wird zur Verfügung gestellt, wenn als ermittelte Stärke des Kollisionsereignisses eine direkt gemessene oder abgeleitete physikalische oder zusammengesetzte Größe verwendet wird, insbesondere eine maximale, mittels eines Beschleunigungssensors gemessene Beschleunigung und/oder Amplitude, ein Impulsübertrag und/oder Energieübertrag. Diese Größe ist ein Indikator dafür, wie stark das Regalsystem durch das Kollisionsereignis beeinflusst wird. In Ausführungsformen ist vorgesehen, dass die Sensoreinheit die ermittelte Stärke des Kollisionsereignisses mit mindestens zwei Referenzstärken vergleicht. Insbesondere wird das Kollisionsereignis mittels des Vergleichs mit verschiedenen Referenzstärken vorklassifiziert. Beispielsweise ist vorgesehen, dass Kollisionsereignisse, welche mehrere Referenzstärken überschreiten, von einem Flurförderzeug priorisiert klassifiziert werden gegenüber einem Kollisionsereignis, dessen Stärke nur eine Referenzstärke überschreitet. Insbesondere werden höher priorisierte Kollisionsereignisse zeitlich vor niedriger priorisierten Kollisionsereignissen klassifiziert, was beispielsweise zur Anwendung kommt, wenn ein Flurförderzeug von mehreren Sensoreinheiten gleichzeitig oder in nahem zeitlichen Abstand Kollisionssignale empfängt. In einer Ausführungsform ist vorgesehen, dass Kollisionsereignisse, die mehrere Referenzstärken überschreiten, mit erhöhtem Ressourceneinsatz, beispielsweise mehr Rechenzeit, klassifiziert werden.

Eine genaue Klassifikation des Kollisionsereignisses wird zudem ermöglicht, wenn das Kollisionssignal die ermittelte Stärke des Kollisionsereignisses und/oder eine von der Sensoreinheit aufgezeichnete Zeitreihe von Messdaten zum Ermitteln der Stärke des Kollisionsereignisses, insbesondere eine Zeitreihe von Beschleunigungen des Kollisionsereignisses, wobei die Zeitreihe den Zeitpunkt des Kollisionsereignisses enthält, umfasst, wobei insbesondere zur Klassifikation des Kollisionsereignisses die Stärke des Kollisionsereignisses und/oder die Zeitreihe von Messdaten ausgewertet werden. Wenn das Kollisionssignal zusätzliche Angaben über das Kollisionsereignis, wie beispielsweise die ermittelte Stärke des Kollisionsereignisses und/oder Messdaten, aus welchen die Stärke des Kollisionsereignisses ermittelt wurde, enthält, stehen diese für eine Analyse im Flurförderzeug zur Verfügung. In Kombination mit den Zustandsdaten des Flurförderzeugs verbessert dies die Klassifikation des Kollisionsereignisses. Insbesondere umfasst das Kollisionssignal eine Referenzstärke oder die mindestens zwei Referenzstärken.

Eine Zeitreihe von Messdaten zum Ermitteln der Stärke des Kollisionsereignisses ist insbesondere eine Zeitreihe von Beschleunigungen des Kollisionsereignisses. Insbesondere ist eine Zeitreihe von Beschleunigungen mittels eines Beschleunigungssensors gemessen. Insbesondere ist in der Sensoreinheit vorgesehen, den Betrag einer Beschleunigung mittels eines Beschleunigungssensors zu messen.

Wenn zur Klassifikation des Kollisionsereignisses eine Zeitreihe von Messdaten ausgewertet werden, ist dazu beispielsweise vorgesehen, die Zeitreihe von Messdaten auf Schwingungsfrequenzen hin auszuwerten. Zum Beispiel können Schwingungsfrequenzen in einer Zeitreihe von Beschleunigungen des Kollisionsereignisses detektiert werden. Insbesondere weist mindestens ein Kollisionsereignistyp ein charakteristisches Eigenschwingungsspektrum auf, wobei zur Klassifikation des Kollisionsereignisses detektierte Schwingungsfrequenzen mit mindestens einem vorbestimmten, jeweils einem Kollisionstyp zugeordnetem Eigenschwingungsspektrum verglichen wird. Beispielsweise sind Schwingungen hoher Frequenz zu erwarten, wenn Regalböden durch vertikale Bewegung von Gabelzinken zum Schwingen angeregt werden, während niedrige Frequenzen zu erwarten sind, wenn ein ganzes Regalsystem schwankt, zum Beispiel durch eine Fahrtkollision mit einem Korpus des Flurförderzeugs.

Um den Nutzer einen erhöhten Bedienkomfort und einen schnellen Überblick über das Kollisionsereignis zu geben, insbesondere für Verwalter von Regalsystemen mit einer Vielzahl von Kollisionsereignissen, ist als Weiterbildung vorgesehen, dass die Klassifikation des Kollisionsereignisses ein Ermitteln eines Erschütterungsniveaus des Kollisionsereignisses als Indikator für die Intensität des Eingriffs in die Integrität des Regalsystems umfasst. Insbesondere ist vorgesehen, dass neben dem Klassifikationstyp ein Kollisionsereignis mit einem Erschütterungsniveau klassifiziert wird. Das Erschütterungsniveau ist beispielsweise "niedrig", "mittel" oder "hoch". Ein Erschütterungsniveau kann auch als Erschütterungsstufe oder Erschütterungslevel bezeichnet werden. In einer Ausführungsform wird das Erschütterungsniveau direkt ausschließlich aus der Stärke des Kollisionsereignisses ermittelt, wobei insbesondere eine Einteilung der Stärke in verschiedene Niveaus der Einteilung in verschiedene Erschütterungsniveaus entspricht. In einer anderen Ausführungsform wird das Erschütterungsniveau in Abhängigkeit der Stärke des Kollisionsereignisses und/oder einer von der Sensoreinheit aufgezeichneten Zeitreihe von Messdaten zum Ermitteln der Stärke des Kollisionsereignisses sowie mindestens einer weiteren Größe ermittelt. Insbesondere wird zum Ermitteln des Erschütterungsniveaus ebenfalls ein Kollisionstyp einbezogen. In einer Ausführungsform, in der als Stärke des Kollisionsereignisses ein maximaler Beschleunigungswert verwendet wird, wird beispielsweise für ein als Fahrtkollision klassifiziertes Kollisionsereignis bereits bei einer geringeren Stärke mit einem hohen Erschütterungsniveau bewertet, weil daraus potentiell eine hohe Gefahr für die Integrität des Regalsystems hervorgehen kann, und bei einem als Lagerkollision klassifiziertem Kollisionsereignis wird eine gleiche Stärke mit einem niedrigen oder mittleren Erschütterungsniveau bewertet.

Insbesondere wird das Erschütterungsniveau an einen Nutzer des verursachenden Flurförderzeugs mitgeteilt, wobei das Flurförderzeug in Ausführungsformen einen Warnhinweis einschließlich des Erschütterungsniveaus anzeigt.

Ferner wird eine genaue Verursacherbestimmung mittels der Klassifikation des Kollisionsereignisses bereitgestellt, wenn die Empfangseinheit eine Signalstärke des Kollisionssignals ermittelt und wenn zur Klassifikation des Kollisionsereignisses die Signalstärke ausgewertet wird, wobei insbesondere, je größer die Signalstärke ist, eine größere Kollisionstypwahrscheinlichkeit ermittelt wird.

Insbesondere wird das Kollisionssignal von der Sensoreinheit an die Empfangseinheit drahtlos, insbesondere mittels Bluetooth Low Energy, übertragen. Insbesondere ist das Kollisionssignal ein Broadcast-Event-Signal, welches ohne spezifischen Empfänger von der Sensoreinheit ausgesendet wird. Vorzugsweise ist die Signalstärke eine Funksignalstärke und/oder ein RSSI-Wert einer drahtlosen Kommunikationsverbindung. Insbesondere für einen Fall, wenn mehrere Flurförderzeuge von der Sensoreinheit das Kollisionssignal empfangen, ist durch Vergleich der von dem jeweiligen Flurförderzeug ermittelten Signalstärken ermittelbar, welches der mehreren Flurförderzeuge die geringste Distanz zur Sensoreinheit aufweist.

Dies liegt unter anderem darin begründet, dass die Signalstärke mit größerer Distanz zwischen Sender und Empfänger abnimmt.

Eine höhere Effizienz der Klassifikation bei Verwendung mehrerer Flurförderzeuge in der Umgebung des Regalsystems ergibt sich, wenn mindestens zwei Flurförderzeuge mittels jeweils einer Empfangseinheit das Kollisionssignal empfangen und in Abhängigkeit der jeweiligen Zustandsdaten jeweils einen Flurförderzeugzustand und/oder jeweils mindestens eine Kollisionstypwahrscheinlichkeit ermitteln und zusammen mit dem Kollisionssignal oder einem eigenen Kollisionssignal an ein Lagerverwaltungssystem übermitteln, wobei das Lagerverwaltungssystem in Abhängigkeit der übermittelten Flurförderzeugzustände und/oder Kollisionstypwahrscheinlichkeiten das Kollisionsereignis einem verursachenden Flurförderzeug zuordnet und mindestens das verursachende Flurförderzeug informiert, wobei die Klassifikation des Kollisionsereignisses mittels des verursachenden Flurförderzeugs durchgeführt wird.

Insbesondere übermitteln die Flurförderzeuge zusammen mit dem Kollisionssignal oder dem eigenen Kollisionssignal eine von der Empfangseinheit des jeweiligen Flurförderzeugs ermittelte Signalstärke an das Lagerverwaltungssystem, wobei das Lagerverwaltungssystem zur Zuordnung des Kollisionsereignisses an ein verursachendes Flurförderzeug die Signalstärken einbezieht.

In einer Ausführungsform ist vorgesehen, dass das Lagerverwaltungssystem eine Datenquelle aufweist, welche die jeweiligen Standorte der Flurförderzeuge zur Verfügung stellt. Beispielsweise verwendet das Lagerverwaltungssystem aus der Datenquelle zur Verfügung gestellte Standorte der Flurförderzeuge zur Zuordnung eines verursachenden Flurförderzeugs zum Kollisionsereignis.

Eine genauere Lokalisierung und dadurch eine bessere Verwertbarkeit der Klassifikation des Kollisionsereignisses wird ermöglicht, wenn die Klassifikation des Kollisionsereignisses umfasst, dass ein Kollisionsort des Kollisionsereignisses ermittelt wird, wobei insbesondere der Kollisionsort in Abhängigkeit der Zustandsdaten und/oder des zugeordneten Kollisionstyps ermittelt wird. Ein Nutzer des Regalsystems und/oder eines Lagerverwaltungssystems kann auf einen so ermittelten Kollisionsort hingewiesen werden, der daraufhin auf Stabilität und Sicherheit überprüft werden kann.

Der Kollisionsort wird sich an demjenigen Regalsystem befinden, das von der das Kollisionsereignis meldenden Sensoreinheit überwacht wird. Wenn bei einem Flurförderzeug festgestellt ist, dass es das Kollisionsereignis verursacht hat, und gegebenenfalls, welchen Kollisionstyp das Kollisionsereignis hat, lässt sich der Kollisionsort näher bestimmen. In Ausführungsformen wird der Kollisionsort unter Berücksichtigung einer Ortsinformation der Sensoreinheit am Regalsystem und/oder innerhalb eines Lagers bestimmt. Bevorzugterweise wird der Kollisionsort unter Berücksichtigung des Masthubs des Flurförderzeugs zum Zeitpunkt des Kollisionsereignisses bestimmt. Beispielsweise befindet sich bei einer Einlagerung einer Last in ein Regal ein Kollisionsort in einem oberen Bereich des Regals, abhängig von der Masthubposition am Flurförderzeug. Bei einer Kollision eines Lastradarms mit einem Regalsystem wird der Kollisionsort nahe des Bodens angeordnet sein.

Eine effiziente Verwertung des Klassifikationsergebnisses wird durch einen weiteren Verfahrensschritt zur Verfügung gestellt, und zwar dass das Verfahren als weiteren Schritt umfasst, dass ein Nutzer des Flurförderzeugs und/oder ein Lagerverwaltungssystem über das Kollisionsereignis informiert wird, insbesondere über die Klassifikation des Kollisionsereignisses. Beispielsweise wird der Nutzer des Flurförderzeugs und/oder ein Lagerverwaltungssystem über einen Kollisionsort und/oder ein Erschütterungsniveau und/oder die Stärke des Kollisionsereignisses und/oder andere Kenngrößen des Kollisionsereignisses informiert.

Eine effiziente Klassifikation des Kollisionsereignisses erfolgt, wenn die Klassifikation des Kollisionsereignisses mittels mindestens einer Methode maschinellen Lernens, insbesondere mittels mindestens eines neuronalen Netzes, und/oder mittels eines Zustandsautomaten erfolgt. Auf diese Weise werden die Klassifikationsergebnisse verbessert. Bevorzugterweise ist ein neuronales Netz zur Klassifikation eines Kollisionsereignisses mittels Trainingsdaten, welche Datensätze von Kollisionssignalen und Zustandsdaten aufweisen, trainiert. Insbesondere enthält jeder Datensatz zusätzlich einen das Kollisionsereignis beschreibenden Klassifikationstyp. In manchen Ausführungsformen weisen die Trainingsdaten weitere, insbesondere aus einem Trainingsmodell generierte, Angaben wie eine ermittelte Stärke und/oder Zeitreihen von Messdaten zum Ermitteln der Stärke des Kollisionsereignisses auf. Nach einem Training eines neuronalen Netzes zur Klassifikation ist dieses ausgebildet und eingerichtet, Kollisionsereignisse anhand der beschriebenen Eigenschaften zu klassifizieren.

Eine zuverlässige Bereitstellung von Zustandsdaten wird sichergestellt, wenn das Flurförderzeug Zustandsdaten des Flurförderzeugs kontinuierlich, insbesondere mittels eines Ringspeichers, aufzeichnet und für einen vorbestimmten Zeitraum zur Verfügung stellt, wobei insbesondere der vorbestimmte Zeitraum an die Dauer des Zeitfensters der aufgezeichneten Zustandsdaten vor und/oder nach dem Kollisionsereignis angepasst ist. Ein Ringspeicher wird insbesondere auch als Ringpuffer bezeichnet. Ein Ringspeicher ist ein Speicher fester Größe, wobei wenn der Ringspeicher voll ist, die jeweils ältesten Inhalte überschrieben werden. Insbesondere werden beim Aufzeichnen der Zustandsdaten jeweils die ältesten gespeicherten Zustandsdaten überschrieben.

Weiterhin wird die Aufgabe gelöst durch ein Kollisionsklassifikationssystem zum Klassifizieren eines Kollisionsereignisses an einem Regalsystem mit mindestens einer Kollisionsmeldeeinrichtung, die eine Sensoreinheit aufweist, wobei insbesondere die Sensoreinheit einen Beschleunigungssensor umfasst, und mindestens einem Flurförderzeug, das eine Empfangseinheit und eine Steuereinheit mit einem Zustandsdatenspeicher aufweist, wobei das Kollisionsklassifikationssystem ausgebildet und eingerichtet ist, ein voranstehend beschriebenes Verfahren zum Klassifizieren eines Kollisionsereignisses an einem Regalsystem auszuführen.

Das Kollisionsklassifikationssystem weist dieselben Vorteile wie das bereits beschriebene Verfahren auf.

Bevorzugterweise umfasst das Kollisionsklassifikationssystem ein Lagerverwaltungssystem, wobei das Lagerverwaltungssystem zum Kommunizieren mit dem mindestens einen Flurförderzeug ausgebildet und eingerichtet ist. Ein Lagerverwaltungssystem ermöglicht eine optimale Verwaltung des Lagers einschließlich des Regalsystems. Beispielsweise wird mittels eines Lagerverwaltungssystems ein Nutzer zuverlässig über alle Kollisionsereignisse an dem mindestens einen Regalsystem informiert.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Seitenansicht eines ersten Kollisionsklassifikationssystems mit einer Fahrtkollision als Kollisionsereignis,
- Fig. 2: eine schematische Seitenansicht des ersten Kollisionsklassifikationssystems mit einem zweiten Kollisionsereignis bei einer Einlagerung einer Last in ein Regal,
- Fig. 3: eine schematische Skizze in Draufsicht eines zweiten Kollisionsklassifikationssystems mit einer Fahrtkollision mit dem Heck eines Flurförderzeugs als einem dritten Kollisionsereignis,
- Fig. 4: einen schematischen Ablauf einer Ausführungsform eines Verfahrens zum Klassifizieren eines Kollisionsereignisses an einem Regalsystem,
- Fig. 5: ein erstes schematisches Zustandsdatendiagramm mit der Fahrgeschwindigkeit des Flurförderzeugs über Zeit,
- Fig. 6: ein zweites schematisches Zustandsdatendiagramm mit der Fahrgeschwindigkeit des Flurförderzeugs über Zeit,
- Fig. 7: ein drittes schematisches Zustandsdatendiagramm mit der Fahrgeschwindigkeit des Flurförderzeugs über Zeit,
- Fig. 8: ein viertes schematisches Zustandsdatendiagramm mit der Fahrgeschwindigkeit des Flurförderzeugs über Zeit sowie der Hubgeschwindigkeit des Flurförderzeugs über Zeit.

In den Zeichnungen sind jeweils gleiche oder gleichartige Elemente und/oder Teile mit denselben Bezugsziffern versehen, so dass von einer erneuten Vorstellung jeweils abgesehen wird.

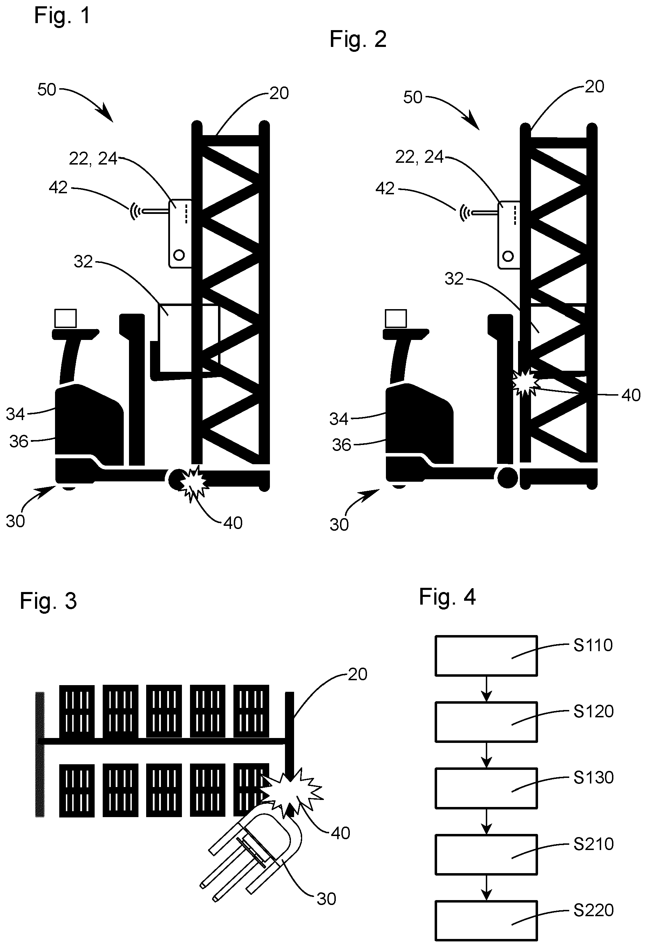

Fig. 1 zeigt eine schematische Seitenansicht eines ersten Kollisionsklassifikationssystems 50 mit einem Kollisionsereignis 40, wobei es sich um eine Fahrtkollision, d.h. ein Anstoßen beim Anfahren eines Regals, handelt. An einem Regalsystem 20 ist eine Sensoreinheit 22 aufweisende Kollisionsmeldeeinrichtung 24 angeordnet. Insbesondere ist die Sensoreinheit 22 an dem Regalsystem 20 befestigbar und/oder befestigt.

In der Nähe des Regalsystems 20 befindet sich ein Flurförderzeug 30, das auf seinen Gabelzinken eine Last 32 transportiert. Das Flurförderzeug verfügt über eine Empfangseinheit 34 und eine Steuereinheit 36.

Bei dem in Fig. 1 dargestellten Kollisionsereignis 40 kollidiert am unteren Ende des Regalsystems 20 ein Lastradarm des Flurförderzeugs 30 mit dem Regalsystem 20. Die Sensoreinheit 22 erkennt das Kollisionsereignis 40 und ermittelt eine Stärke des Kollisionsereignisses 40. In diesem Ausführungsbeispiel weist die Sensoreinheit 22 einen Beschleunigungssensor auf. Die ermittelte Stärke des Kollisionsereignisses 40 ist die maximale Amplitude einer vom Beschleunigungssensor gemessenen Beschleunigung. Diese Beschleunigung kann in geeigneten Einheiten dargestellt werden, beispielsweise als m/s² oder als g-Kraft, also in Einheiten der Erdbeschleunigung von 9,81 m/s². Die ermittelte Stärke wird von der Sensoreinheit mit einer Referenzstärke, in diesem Ausführungsbeispiel eine Referenzamplitude der Beschleunigung, verglichen.

Da in diesem Ausführungsbeispiel die Stärke des Kollisionsereignisses 40 die Referenzstärke überschreitet, sendet die Sensoreinheit 22 ein drahtloses Kollisionssignal 42 aus, das von der Empfangseinheit 34 des Flurförderzeugs 30 empfangen und an die Steuereinheit 36 des Flurförderzeugs 30 weitergeleitet wird. Dort erfolgt eine Klassifikation des Kollisionsereignisses 40.

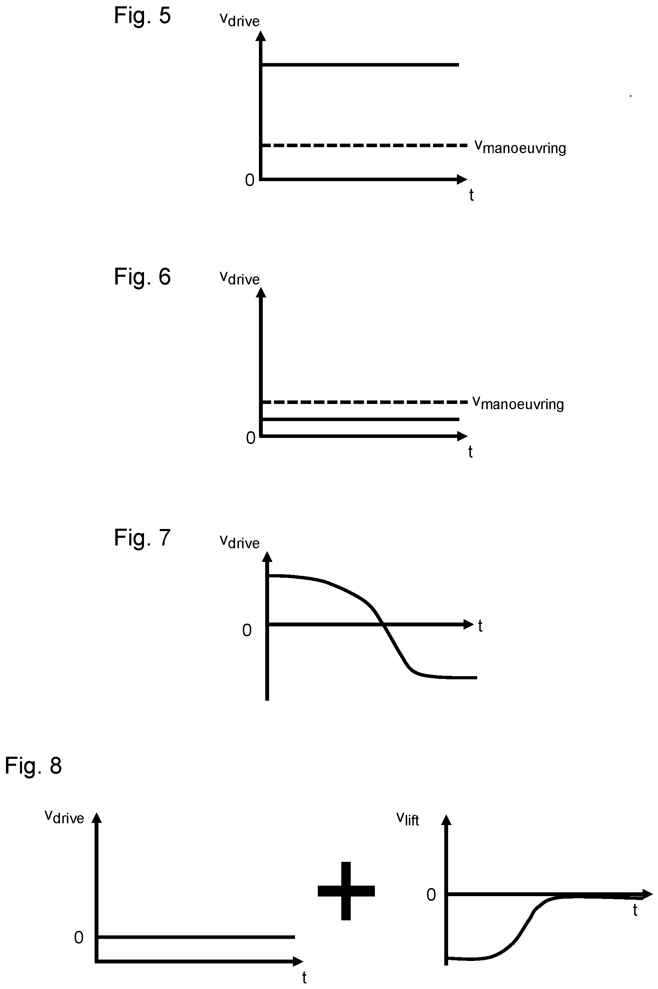

In diesem Ausführungsbeispiel weist die Kollisionstypliste drei Kollisionstypen auf: "Flurförderzeug nicht kollisionsverursachend", "Fahrtkollision", "Einlagerung von Last". In diesem Ausführungsbeispiel wird für jeden der drei Kollisionstypen eine Kollisionswahrscheinlichkeit zwischen 0% und 100% oder zwischen 0 und 1 auf Grundlage von Zustandsdaten des Flurförderzeugs 30 und vom Kollisionssignal 42 errechnet. Da die Kollisionswahrscheinlichkeit für "Fahrtkollision" am höchsten der drei Kollisionstypen der Kollisionstypenliste errechnet wird, wird dieser Kollisionstyp als Klassifikation ausgegeben und dem Nutzer des Flurförderzeugs 30 auf einem Display angezeigt. Möglichkeiten, zwischen den Kollisionstypen zu unterscheiden, werden weiter unten im Zusammenhang mit den Figuren 5 bis 8 noch beschrieben.

Fig. 2 zeigt das erste Kollisionsklassifikationssystem 50, welches in Fig. 1 dargestellt wurde, mit einem zweiten Kollisionsereignis 40. Dieses Kollisionsereignis 40 erfolgt bei Einlagerung einer Last 32 in ein Regal, wobei ein zu schnelles Absenken der Last 32 zu einer Erschütterung im Regalsystem 20 führt. Diese wird durch die Sensoreinheit 22 registriert und dessen Stärke ermittelt. In diesem Ausführungsbeispiel kann die Sensoreinheit 22 eingerichtet und ausgebildet sein, als Stärke den Impulsübertrag durch das Kollisionsereignis 40 zu ermitteln. Die Übermittlung eines Kollisionssignals 42 erfolgt ähnlich wie für Fig. 1 beschrieben.

In diesem Ausführungsbeispiel ist eine Kollisionstypliste mit fünf Kollisionstypen vorgesehen. Neben dem einzelnen Kollisionstyp "Flurförderzeug nicht kollisionsverursachend" sind jeweils die Kollisionstypen "Fahrbewegungskollision" und "Lagerungskollision" in "hohe Intensität" und in "niedrige Intensität" vorgesehen. Folglich wird das Kollisionsereignis 40 neben der Art der Kollision auch in seiner Intensität klassifiziert. Dies kann beispielsweise verwendet werden, um die Dringlichkeit einer Wartung und gegebenenfalls Reparatur am Kollisionsort zu beurteilen.

In Fig. 3 ist eine schematische Skizze in Draufsicht eines zweiten Kollisionsklassifikationssystems 50 mit einer Fahrtkollision mit dem Heck eines Flurförderzeugs 30 als einem dritten Kollisionsereignis 40 dargestellt.

Ein solches Kollisionsereignis 40, beispielsweise als "Heckkollision" klassifiziert, wird beispielsweise durch eine geringe Fahrtgeschwindigkeit des Flurförderzeugs 30 und eine erhebliche Drehgeschwindigkeit des Flurförderzeugs 30 indiziert. Zeigen die Zustandsdaten des Flurförderzeugs 30 eine solche Bewegung, ist eine solche Heckkollision wahrscheinlich, sofern das Flurförderzeug 30 in der Nähe des Kollisionsorts positioniert ist.

Fig. 4 zeigt einen schematischen Ablauf einer Ausführungsform eines Verfahrens zum Klassifizieren eines Kollisionsereignisses 40 an einem Regalsystem 20.

In einem ersten Schritt erkennt eine an einem Regalsystem 20 angeordnete Sensoreinheit 22 ein Kollisionsereignis 40 zwischen einem Flurförderzeug 30 und einem Regalsystem 20 und ermittelt eine Stärke des Kollisionsereignisses (S110). Die Stärke eines Kollisionsereignisses ist beispielsweise eine Beschleunigung, ein Impulsübertrag und/oder ein Energieübertrag.

Die ermittelte Stärke wird mit einer Referenzstärke verglichen (S120). In einigen Ausführungsformen ist vorgesehen, die ermittelte Stärke mit mehreren Referenzstärken zu vergleichen. Auf diese Weise ermittelt die Sensoreinheit 22 eine Intensität des Kollisionsereignisses 40. Falls die ermittelte Stärke die Referenzstärke überschreitet, sendet die Sensoreinheit 22 ein Kollisionssignal 42 aus (S130). Beispielsweise übermittelt die Sensoreinheit 22 das Ergebnis eines Vergleichs mit mehreren Referenzstärken in einem Kollisionssignal 42.

Eine Empfangseinheit 34 eines Flurförderzeugs 30 empfängt das Kollisionssignal 42 und leitet es an eine Steuereinheit 36 des Flurförderzeugs 30 weiter (S210). Diese führt in Abhängigkeit von Zustandsdaten des Flurförderzeugs 30 und vom Kollisionssignal 42 eine Klassifikation durch (S220).

In einem Ausführungsbeispiel kann die Empfangseinheit 34 eine Signalstärke des Kollisionssignals 42 bestimmen, beispielsweise in Form eines sogenannten Received Signal Strength Indication (RSSI)-Signals einer Funkverbindung, beispielsweise einer Bluetooth Low Energy-Funkverbindung. Die Signalstärke wird zusammen mit dem Kollisionssignal 42 an die Steuereinheit 36 weitergeleitet, wobei die Steuereinheit 36 in Abhängigkeit vom Kollisionssignal 42 und der Signalstärke die Klassifikation durchführt. So ist die Signalstärke abhängig von der Distanz des Flurförderzeugs 30 zur Sensoreinheit 22. Dies kann dazu verwendet werden, bei einem geringen RSSI-Signal eine Kollisionstypwahrscheinlichkeit für eine Kollision von Flurförderzeug 30 mit dem Regalsystem 20 niedriger einzuschätzen als bei einem starken RSSI-Signal.

Beispielhaft sind mögliche Abhängigkeiten der Klassifikation von Zustandsdaten des Flurförderzeugs 30 in Fig. 5 bis 8 dargestellt.

Fig. 5 zeigt ein erstes schematisches Zustandsdatendiagramm mit der Fahrgeschwindigkeit v_{drive} eines Flurförderzeugs 30 über Zeit. Eine Fahrgeschwindigkeit ist über das gesamte Zeitfenster konstant und größer als eine Rangiergeschwindigkeit v_{manoeuvring}. Dies lässt darauf schließen, dass sich das Flurförderzeug 30 durch eine Logistikeinrichtung bewegt und sich nicht in einem Rangiervorgang befindet. Da außerdem bei einem Kollisionsereignis 40 üblicherweise Änderungen in der Geschwindigkeit auftreten, deutet eine konstante Geschwindigkeit darauf hin, dass das Flurförderzeug 30 nicht an einem Kollisionsereignis 40 beteiligt war. Bei der Klassifikation wird einem in Fig. 5 dargestellten Verlauf mit einer hohen Klassifikationstypwahrscheinlichkeit ein Kollisionstyp "Flurförderzeug nicht verursachend" zugeordnet.

Fig. 6 zeigt ein zweites schematisches Zustandsdatendiagramm, wobei ähnlich wie in Fig. 5 die Fahrgeschwindigkeit v_{drive} des Flurförderzeugs 30 gegen die Zeit aufgetragen ist. In diesem Fall liegt die Fahrgeschwindigkeit konstant unterhalb einer Rangiergeschwindigkeit v_{manoeuvring}. Dies deutet darauf hin, dass das Flurförderzeug 30 eine Rangierfahrt vorgenommen hat, beispielsweise um sich vor einem Regalsystem 20 für ein Be- oder Entladen zu positionieren. Bei einem solchen Vorgang sind Kollisionen zwischen Flurförderzeug 30 und Regalsystem 20 nicht unwahrscheinlich, und eine leichte Kollision, beispielsweise ein Touchieren, muss nicht unbedingt zu einer starken Geschwindigkeitsänderung führen. Entsprechend sind Zustandsdaten wie in Fig. 6 ein Indiz dafür, dass eine Kollision durch das betreffende Flurförderzeug 30 ausgelöst worden sein könnte. Gegebenenfalls müssen weitere Fahrzeugzustandsdaten ausgewertet werden, um zu einer ausreichend hohen Kollisionstypwahrscheinlichkeit zu gelangen.

In Fig. 7 zeigt ein drittes schematisches Zustandsdatendiagramm eine Fahrgeschwindigkeit v_{drive}, die im betreffenden Zeitfenster, für welches Zustandsdaten zur Verfügung gestellt sind, einen Vorzeichenwechsel aufweist. Dies ist charakteristisch bei einer Kollision zwischen Flurförderzeug 30 und Regalsystem 20 bei einer Fahrtkollision, denn nach einem Kollisionsereignis setzt das Flurförderzeug 30 in der Regel zurück, um den Fahrweg zu korrigieren. Entsprechend korreliert der in Fig. 7 dargestellte Verlauf der Zustandsdaten mit einer erhöhten Kollisionstypwahrscheinlichkeit für Kollisionstypen für eine Fahrtkollision, insbesondere wenn ein Flurförderzeug 30 ein Regalsystem 20 zum Be- oder Entladen anfährt.

Die in den Figuren 5 bis 7 dargestellten Zustandsdaten sind jeweils in einem Zeitfenster aufgenommen, innerhalb dessen sich der Zeitpunkt des Kollisionsereignisses 40 befindet. In Fig. 7 ist der Zeitpunkt des Kollisionsereignisses 40 beispielsweise, wenn die Fahrgeschwindigkeit den Wert 0 erreicht.

In anderen, nicht dargestellten Ausführungsbeispielen kann das Zeitfenster, in dem die Zustandsdaten aufgenommen werden oder sind, ausschließlich vor und während des Kollisionsereignisses 40 sein, sodass Zustandsdaten von Zeitpunkten nach dem Kollisionsereignis 40 nicht berücksichtigt werden. In weiteren Ausführungsbeispielen werden momentane Zustandsdaten zum Zeitpunkt des Kollisionsereignisses für die Klassifikation des Kollisionstyps berücksichtigt. Die zeitliche Einschränkung eines Zeitfensters für die Zustandsdaten verringert die Datengrundlage für die Klassifikation, allerdings wird dadurch der Rechenaufwand verringert, sodass eine Klassifikation schneller verfügbar ist.

Schließlich ist in Fig. 8 ein viertes Fallbeispiel anhand schematischer Zustandsdatendiagramme dargestellt, wobei einerseits die Fahrgeschwindigkeit v_{drive} und andererseits die Hubgeschwindigkeit v_{lift} über Zeit aufgetragen ist. Die Fahrgeschwindigkeit v_{drive} ist konstant null oder fast null, sodass sich das Flurförderzeug 30 nicht bewegt. Die Hubgeschwindigkeit v_{lift} ist zu Beginn des Zeitfensters negativ mit weist einen relativ großen Betrag auf, d.h. dass eine Last mit dieser Geschwindigkeit abgesetzt bzw. abgesenkt wird. Der Betrag der Hubgeschwindigkeit verringert sich mit der Zeit, bis dieser nahezu Null ist. Folglich wird die Last nicht weiter abgesetzt und auch nicht angehoben. Entsprechend ist dies ein typisches Diagramm für den Verlauf einer Hubgeschwindigkeit beim Absenken einer Last. Gemeinsam mit einem stehenden Flurförderzeug 30, schließlich ist die Fahrgeschwindigkeit null, deutet dies auf ein Absetzen einer Last 32 durch das Flurförderzeug 30 hin.

In einem Ausführungsbeispiel ist vorgesehen, dass die Klassifikation des Kollisionsereignisses 40 umfasst, dass ein Kollisionsort des Kollisionsereignisses 40 ermittelt wird. Beispielsweise wird für die Zustandsdaten in Fig. 8 ein Kollisionstyp "Lastabsetzen im Regal" ermittelt. Zusätzlich hierzu wertet die Steuereinheit 36 des Flurförderzeugs 30 einen Masthub des Flurförderzeugs 30 in einem Zeitfenster um das Kollisionsereignis 40 aus. Aus dem Masthub kann bestimmt werden, in welcher Höhe die Last 32 wahrscheinlich mit dem Regalsystem 20 kollidiert ist. Diese Information wird an einen Nutzer des Flurförderzeugs 30 und/oder ein Lagerverwaltungssystem übermittelt, sodass bei einer späteren Prüfung spezifisch der wahrscheinliche Kollisionsort überprüft werden kann.

Eine weitere, nicht dargestellte Analyse von Zustandsdaten erfolgt beispielsweise mittels Messung einer Drehwinkelgeschwindigkeit. Bei einer hohen Drehwinkelgeschwindigkeit und einer geringen Fahrgeschwindigkeit deutet dies auf eine Kollision des Flurförderzeugs 30 mit einem Regalsystem 20 mit einem Heck des Flurförderzeugs 30 aus einer Drehbewegung heraus hin, wobei insbesondere zusätzlich eine Orientierung des Flurförderzeugs 30 relativ zum Regalsystem 20 hinzugenommen werden kann.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 20: Regalsystem
- 22: Sensoreinheit
- 24: Kollisionsmeldeeinrichtung
- 30: Flurförderzeug
- 32: Last
- 34: Empfangseinheit
- 36: Steuereinheit
- 40: Kollisionsereignis
- 42: Kollisionssignal
- 50: Kollisionsklassifikationssystem

- S110: Erkennen eines Kollisionsereignisses und Ermitteln einer Stärke des Kollisionsereignisses
- S120: Vergleichen der ermittelten Stärke mit einer Referenzstärke
- S130: Senden eines dem Kollisionsereignis zugeordneten Kollisionssignals
- S210: Empfangen des Kollisionssignals und Weiterleiten an eine Steuereinheit
- S220: Durchführen einer Klassifikation des Kollisionsereignisses

- v_{Drive}: Fahrgeschwindigkeit
- v_{manoeuvring}: Rangiergeschwindigkeit
- v_{Lift}: Hubgeschwindigkeit
- t: Zeit

## Patentansprüche

1. Verfahren zum Klassifizieren eines Kollisionsereignisses (40) an einem Regalsystem (20), umfassend die folgenden Schritte:
- eine an einem Regalsystem (20) angeordnete Sensoreinheit (22) erkennt ein Kollisionsereignis (40) zwischen einem Flurförderzeug (30) und dem Regalsystem (20) und ermittelt eine Stärke des Kollisionsereignisses (S110), vergleicht die ermittelte Stärke mit einer Referenzstärke (S120) und sendet ein dem Kollisionsereignis (40) zugeordnetes Kollisionssignals (42) aus, falls die ermittelte Stärke die Referenzstärke überschreitet (S130);
- eine Empfangseinheit (34) eines Flurförderzeugs (30) empfängt das Kollisionssignal (42) und leitet es an eine Steuereinheit (36) des Flurförderzeugs (30) weiter (S210), welche eine Klassifikation des Kollisionsereignisses (40) in Abhängigkeit von Zustandsdaten des Flurförderzeugs (30) und vom Kollisionssignal (42) durchführt (S220),
wobei die Klassifikation des Kollisionsereignisses (40) ein Zuordnen eines Kollisionstyps aus einer Kollisionstypliste umfasst, wobei die Kollisionstypliste mindestens einen Kollisionstyp, für den das Kollisionsereignis (40) nicht dem Flurförderzeug (30) zugeordnet wird, und mindestens einen Kollisionstyp, für den das Kollisionsereignis (40) dem Flurförderzeug (30) zugeordnet wird, umfasst.

2. Verfahren zum Klassifizieren eines Kollisionsereignisses (40) an einem Regalsystem (20) nach Anspruch 1, **dadurch gekennzeichnet, dass** die Kollisionsliste mindestens zwei verschiedene Kollisionstypen umfasst, für die das Kollisionsereignis (40) dem Flurförderzeug (30) zugeordnet wird.

3. Verfahren zum Klassifizieren eines Kollisionsereignisses (40) an einem Regalsystem (20) nach Anspruch 1 oder 2, **dadurch gekennzeichnet, dass** das Zuordnen eines Kollisionstyps umfasst, dass mindestens eine Kollisionstypwahrscheinlichkeit ermittelt wird, welche eine Wahrscheinlichkeit angibt, dass das Kollisionsereignis (40) eindeutig einem bestimmten Kollisionstyp zuordenbar ist, wobei insbesondere für jeden Kollisionstyp jeweils eine eigene Kollisionstypwahrscheinlichkeit ermittelt wird.

4. Verfahren zum Klassifizieren eines Kollisionsereignisses (40) an einem Regalsystem (20) nach einem der Ansprüche 1 bis 3, **dadurch gekennzeichnet, dass** die Zustandsdaten des Flurförderzeugs (30) eine Fahrgeschwindigkeit des Flurförderzeugs (30) und/oder eine Hubgeschwindigkeit des Flurförderzeugs (30) und/oder eine mittels eines am Flurförderzeug (30) angebrachten Beschleunigungssensors gemessene Beschleunigung umfassen.

5. Verfahren zum Klassifizieren eines Kollisionsereignisses (40) an einem Regalsystem (20) nach einem der Ansprüche 1 bis 4, **dadurch gekennzeichnet, dass** die Zustandsdaten in einem Zeitfenster aufgenommen werden oder sind und das Zeitfenster den Zeitpunkt des Kollisionsereignisses sowie einen Zeitraum vor und/oder nach dem Zeitpunkt des Kollisionsereignisses umfasst und/oder dass das Flurförderzeug (30) Zustandsdaten des Flurförderzeugs (30) kontinuierlich, insbesondere mittels eines Ringspeichers, aufzeichnet und für einen vorbestimmten Zeitraum zur Verfügung stellt, wobei insbesondere der vorbestimmte Zeitraum an die Dauer des Zeitfensters der aufgezeichneten Zustandsdaten vor und/oder nach dem Kollisionsereignis (40) angepasst ist.

6. Verfahren zum Klassifizieren eines Kollisionsereignisses (40) an einem Regalsystem (20) nach einem der Ansprüche 1 bis 5, **dadurch gekennzeichnet, dass** für die Klassifikation des Kollisionsereignisses (40) ein Flurförderzeugzustand zum Zeitpunkt des Kollisionsereignisses (40) in Abhängigkeit der Zustandsdaten ermittelt wird, wobei insbesondere die mindestens eine Kollisionstypwahrscheinlichkeit und/oder der zugeordnete Kollisionstyp in Abhängigkeit des ermittelten Flurförderzeugzustands ermittelt wird.

7. Verfahren zum Klassifizieren eines Kollisionsereignisses (40) an einem Regalsystem (20) nach einem der Ansprüche 1 bis 6, **dadurch gekennzeichnet, dass** das Zuordnen eines Kollisionstyps mindestens zwei aufeinanderfolgende Schritte aufweist, wobei in einem ersten Schritt, insbesondere mittels mindestens einer ersten Kollisionstypwahrscheinlichkeit, ermittelt wird, ob das Kollisionsereignis (40) dem Flurförderzeug (30) zugeordnet wird, und in einem zweiten Schritt, insbesondere mittels mindestens einer zweiten Kollisionstypwahrscheinlichkeit, dem Kollisionsereignis (40) ein Kollisionstyp zugeordnet wird.

8. Verfahren zum Klassifizieren eines Kollisionsereignisses (40) an einem Regalsystem (20) nach einem der Ansprüche 1 bis 7, **dadurch gekennzeichnet, dass** als ermittelte Stärke des Kollisionsereignisses (40) eine direkt gemessene oder abgeleitete physikalische oder zusammengesetzte Größe verwendet wird, insbesondere eine maximale, mittels eines Beschleunigungssensors gemessene Beschleunigung und/oder Amplitude, ein Impulsübertrag und/oder Energieübertrag, und/oder dass die Sensoreinheit (22) die ermittelte Stärke des Kollisionsereignisses (40) mit mindestens zwei Referenzstärken vergleicht.

9. Verfahren zum Klassifizieren eines Kollisionsereignisses (40) an einem Regalsystem (20) nach einem der Ansprüche 1 bis 8, **dadurch gekennzeichnet, dass** das Kollisionssignal (42) die ermittelte Stärke des Kollisionsereignisses (40) und/oder eine von der Sensoreinheit (22) aufgezeichnete Zeitreihe von Messdaten zum Ermitteln der Stärke des Kollisionsereignisses (40), insbesondere eine Zeitreihe von Beschleunigungen des Kollisionsereignisses (40), wobei die Zeitreihe den Zeitpunkt des Kollisionsereignisses (40) enthält, umfasst,
wobei insbesondere zur Klassifikation des Kollisionsereignisses (40) die Stärke des Kollisionsereignisses (40) und/oder die Zeitreihe von Messdaten ausgewertet werden,
wobei insbesondere die Klassifikation des Kollisionsereignisses (40) ein Ermitteln eines Erschütterungsniveaus des Kollisionsereignisses (40) als Indikator für die Intensität des Eingriffs in die Integrität des Regalsystems (20) umfasst.

10. Verfahren zum Klassifizieren eines Kollisionsereignisses (40) an einem Regalsystem (20) nach einem der Ansprüche 1 bis 9, **dadurch gekennzeichnet, dass** die Empfangseinheit (34) eine Signalstärke des Kollisionssignals (42) ermittelt und dass zur Klassifikation des Kollisionsereignisses (40) die Signalstärke ausgewertet wird, wobei insbesondere, je größer die Signalstärke ist, eine größere Kollisionstypwahrscheinlichkeit ermittelt wird.

11. Verfahren zum Klassifizieren eines Kollisionsereignisses (40) an einem Regalsystem (20) nach einem der Ansprüche 1 bis 10, **dadurch gekennzeichnet, dass** mindestens zwei Flurförderzeuge (30) mittels jeweils einer Empfangseinheit (34) das Kollisionssignal (42) empfangen und in Abhängigkeit der jeweiligen Zustandsdaten jeweils einen Flurförderzeugzustand und/oder jeweils mindestens eine Kollisionstypwahrscheinlichkeit ermitteln und zusammen mit dem Kollisionssignal (42) oder einem eigenen Kollisionssignal an ein Lagerverwaltungssystem übermitteln, wobei das Lagerverwaltungssystem in Abhängigkeit der übermittelten Flurförderzeugzustände und/oder Kollisionstypwahrscheinlichkeiten das Kollisionsereignis (40) einem verursachenden Flurförderzeug (30) zuordnet und mindestens das verursachende Flurförderzeug (30) informiert, wobei die Klassifikation des Kollisionsereignisses (40) mittels des verursachenden Flurförderzeugs (30) durchgeführt wird.

12. Verfahren zum Klassifizieren eines Kollisionsereignisses (40) an einem Regalsystem (20) nach einem der Ansprüche 1 bis 11, **dadurch gekennzeichnet, dass** die Klassifikation des Kollisionsereignisses (40) umfasst, dass ein Kollisionsort des Kollisionsereignisses (40) ermittelt wird, wobei insbesondere der Kollisionsort in Abhängigkeit der Zustandsdaten und/oder des zugeordneten Kollisionstyps ermittelt wird.

13. Verfahren zum Klassifizieren eines Kollisionsereignisses (40) an einem Regalsystem (20) nach einem der Ansprüche 1 bis 12, **dadurch gekennzeichnet, dass** das Verfahren als weiteren Schritt umfasst, dass ein Nutzer des Flurförderzeugs (30) und/oder ein Lagerverwaltungssystem über das Kollisionsereignis (40) informiert wird, insbesondere über die Klassifikation des Kollisionsereignisses (40).

14. Verfahren zum Klassifizieren eines Kollisionsereignisses (40) an einem Regalsystem (20) nach einem der Ansprüche 1 bis 13, **dadurch gekennzeichnet, dass** die Klassifikation des Kollisionsereignisses (40) mittels mindestens einer Methode maschinellen Lernens, insbesondere mittels mindestens eines neuronalen Netzes, und/oder mittels eines Zustandsautomaten erfolgt.

15. Kollisionsklassifikationssystem (50) zum Klassifizieren eines Kollisionsereignisses (40) an einem Regalsystem (20) mit mindestens einer Kollisionsmeldeeinrichtung (24), die eine Sensoreinheit (22) aufweist, wobei insbesondere die Sensoreinheit (22) einen Beschleunigungssensor umfasst, und mindestens einem Flurförderzeug (30), das eine Empfangseinheit (34) und eine Steuereinheit (36) mit einem Zustandsdatenspeicher aufweist, wobei das Kollisionsklassifikationssystem (50) ausgebildet und eingerichtet ist, ein Verfahren zum Klassifizieren eines Kollisionsereignisses (40) an einem Regalsystem (20) nach einem der Ansprüche 1 bis 14 auszuführen, wobei das Kollisionsklassifikationssystem (50) insbesondere ein Lagerverwaltungssystem umfasst, das zum Kommunizieren mit dem mindestens einen Flurförderzeug (30) ausgebildet und eingerichtet ist.
